# EUROPÄISCHE PATENTANMELDUNG

(11) **EP 4 557 029 A1**
(43) Veröffentlichungstag der Anmeldung: **21.05.2025**
(21) Anmeldenummer: 23210259.0
(22) Anmeldetag: 16.11.2023
(51) Int. Cl.: G05B 19/416

(54) **VERFAHREN ZUR STEUERUNG BEI EINER WERKZEUG- UND/ODER PRODUKTIONSMASCHINE**

(71) Anmelder: Siemens Aktiengesellschaft, 80333 München (DE)
(72) Erfinder: Bock, Marco, 91056 Erlangen (DE); Ladra, Uwe, 91056 Erlangen (DE); Linke, Hartmut, 91056 Erlangen (DE); Schäfers, Elmar, 90763 Fürth (DE); Schür, Torsten, 91058 Erlangen (DE); Siegel, Philipp, 08064 Zwickau (DE)
(74) Vertreter: Siemens Patent Attorneys

(57) **Zusammenfassung**

Die Erfindung betrifft ein Verfahren zur Steuerung einer Rotationsbewegung eines Werkzeugs (6) anhand eines Teileprogramms bei einer Werkzeugmaschine (1), wobei in dem Teileprogramm eine vom Werkzeug (6) durchzuführende Rückzugsbewegung und eine Verfahrbewegung vorgegeben ist, wobei die Rotationsbewegung (D) des Werkzeugs (6) während der Rückzugsbewegung und/oder Verfahrbewegung abgebremst wird.

## Beschreibung

Die Erfindung betrifft ein Verfahren zur Steuerung einer Rotationsbewegung eines Werkzeugs bei einer Werkzeug- und/oder Produktionsmaschine.

Manche Werkzeugmaschinen sind besonders gut für das Gewindeschneiden geeignet, diese werden insbesondere bei Tapping Centern eingesetzt. Meist ist die Produktivität der Maschine eng mit einer Leistungsfähigkeit der Spindel verbunden. Insbesondere thermische Problem können eine Produktivität verringern.

Das thermische Problem wird oftmals dadurch gelöst, dass die Spindel nur mit Nennstrom beschleunigt wird bzw. bei einem Strom betrieben wird, der bei oder wenig über ihrem Nennstrom liegt. Dies ist jedoch insbesondere hinsichtlich einer Dynamik von Nachteil, da nur ca. ein Drittel der möglichen Beschleunigung vorliegt.

Der Erfindung liegt die Aufgabe zugrunde, die Steuerung der Spindel, insbesondere hinsichtlich thermischer Probleme, zu verbessern.

Die Lösung der Aufgabe gelingt durch Anspruch 1, d. h. ein Verfahren zur Steuerung einer Rotationsbewegung eines Werkzeug- und/oder Produktionsmaschine anhand eines Teileprogramms bei einer Werkzeugmaschine, wobei in dem Teileprogramm eine vom Werkzeug durchzuführende Rückzugsbewegung und eine Verfahrbewegung vorgegeben ist, wobei die Rotationsbewegung des Werkzeugs während der Rückzugsbewegung und/oder Verfahrbewegung abgebremst wird.

Die Spindel wird vorzugsweise in der Zeitdauer abgebremst, in welcher die Spindel zu einer nächsten Bearbeitungsstelle verfahren wird.

Die nächste Bearbeitungsstelle ist beispielsweise der Ort, an welchem ein weiteres Gewinde geschnitten werden soll.

Vorteilhaft ist eine Ausführungsform, wonach, wenn das Werkzeug nur während der Rückzugsbewegung abgebremst wird, das Werkzeug derart abgebremst wird, dass die Rotationsbewegung bei einer definierten Rückzugsebene gleich null ist.

Auf diese Weise wird die Spindel weniger warm.

Die definierte Rückzugsebene liegt vorteilhaft zwischen 5 mm und 15 mm, insbesondere zwischen 8 mm und 12 mm.

Es sind auch andere möglich, insbesondere dann, wenn ein Hindernis überwunden werden muss.

Vorteilhaft ist ferner eine Ausführungsform, wonach, wenn das Werkzeug während der Verfahrbewegung abgebremst wird, das Werkzeug derart abgebremst wird, dass die Rotationsbewegung bei einem Ende der Verfahrbewegung gleich null ist.

So ist die für die Abbremsung verfügbare Zeitspanne besonders groß, dass nur eine geringe Erwärmung beim Abbremsen vorliegt.

Vorteilhaft ist zudem eine Ausführungsform, wonach die Rotationsbewegung des Werkzeugs während der Rückzugsbewegung und wenigstens teilweise während der Verfahrbewegung abgebremst wird.

Auch diese Ausführungsform bringt Vorteile hinsichtlich thermischer Probleme mit sich.

Vorteilhaft ist eine Ausführungsform, wonach das Werkzeug in einer ersten Rotationsrichtung beschleunigt wird, wobei das in der ersten Rotationsrichtung rotierende Werkzeug abgebremst wird, wobei das Werkzeug in eine zweite Rotationsrichtung beschleunigt wird, wobei das in der zweiten Rotationsrichtung rotierende Werkzeug abgebremst wird, wobei eine Zeitdauer des Abbremsens des in der zweiten Rotationsrichtung rotierenden Werkzeugs größer ist als eine Zeitdauer des Abbremsens des in der ersten Rotationsrichtung rotierenden Werkzeugs.

Dies ist in der Figurenbeschreibung näher erläutert.

Vorteilhaft ist zudem eine Ausführungsform, wonach anhand der im Teileprogramm vorgegebenen Verfahrbewegung des Werkzeugs die benötigte Zeitdauer zur Durchführung der vorgegebenen Verfahrbewegung ermittelt wird, wobei anhand der Zeitdauer die benötigte Kraftanstrengung zum Abbremsen ermittelt wird.

Die Lösung der Aufgabe gelingt ferner durch eine Steuereinrichtung zur Durchführung des Verfahrens.

Die Lösung der Aufgabe gelingt zudem durch eine Werkzeugmaschine, aufweisend eine Steuereinrichtung.

Die Lösung der Aufgabe gelingt auch durch ein Computerprogrammprodukt, umfassend Befehle, die bei der Ausführung des Programms durch eine Steuereinrichtung diese veranlassen, das Verfahren auszuführen.

Die Erfindung ist insbesondere aufgrund einer Ausnutzung flexibler Anfangs- bzw. Endbedingungen des Tappingvorgangs von Vorteil.

Meist beginnt und endet der Vorgang mit einem Stopp aller Achsen.

Besonders vorteilhaft ist es jedoch, wenn der Beginn des Tappingvorgangs fliegend erfolgt. Dabei werden vorzugsweise Spindel und beteiligte Vorschubachse an einer vom Anwender definierten Koordinate (z.B. 1 mm vor Gewinde) mit programmierter Geschwindigkeit und/oder Spindeldrehzahl synchronisiert.

Ein fliegendes Ende wird insbesondere dadurch beschrieben, dass beim Verlassen des Gewindes (z.B. 1 mm nach Gewinde) seitens des Anwenders eine Spindeldrehzahl (z.B. 6000 Umdrehungen pro Minute) vorgegeben wird.

Ein weiteres Beispiel für eine sinnvolle Vorgabe der Anfangs- und/oder Endbedingungen wäre, dass zwar - wie heute - der Vorgang mit Stopp aller Achsen beginnt und endet, das Ende aber auf die Rückzugsebene gelegt wird. Die Spindel muss dann nicht auf die Position direkt hinter dem Bohrloch abgebremst werden (z.B. 1 mm), sondern erst auf die definierte Rückzugsebene (z.B. 10 mm) .

Thermisch betrachtet ist das ein großer Vorteil.

Auch ein Einsatz verlustminimaler Bewegungsprofile ist ein Vorteil.

Sind die oben beschriebenen Anfangs- und/oder Endbedingungen definiert, dann werden vorteilhaft seitens einer Numerischen Steuerung (auch Numerical Control, NC) die Bewegungsprofile verlustminimal berechnet und ausgegeben. Der Anwender kann fließend zwischen der zeitoptimalen Profilgenerierung und der Reduktion der Verluste mittels der verlustminimalen Profile wählen.

Das Verfahren zur Parametrierung der verlustminimalen Bewegung weist vorzugsweise folgende Schritte auf: Vorzugsweise ermittelt der Anwender die maximal mögliche Beschleunigung. Mittels eines Faktors kann der Anwender dann den Kompromiss zwischen Reduktion der Verluste und Positionierzeit transparent einstellen.

Im Folgenden wird die Erfindung anhand der in den Figuren dargestellten Ausführungsbeispiele näher beschrieben und erläutert.

Es zeigen:
- FIG 1: einen typischen Geschwindeschneidzyklus durch eine Werkzeugmaschine,
- FIG 2: einen verbesserten Geschwindeschneidzyklus,
- FIG 3: eine Möglichkeit zur Reduzierung der thermischen Belastung,
- FIG 4: die Anwendung der verlustminimalen Positionierung auf den Tappingvorgang aus FIG 2,
- FIG 5: Möglichkeiten zur verlustminimalen Positionierung bei leicht erhöhten maximalen Beschleunigungswerten,
- FIG 6: eine Möglichkeit zur Energieeinsparung,
- FIG 7: eine Werkzeugmaschine,
- FIG 8: ein Verfahren und
- FIG 9: ein Simulationsprogrammprodukt.

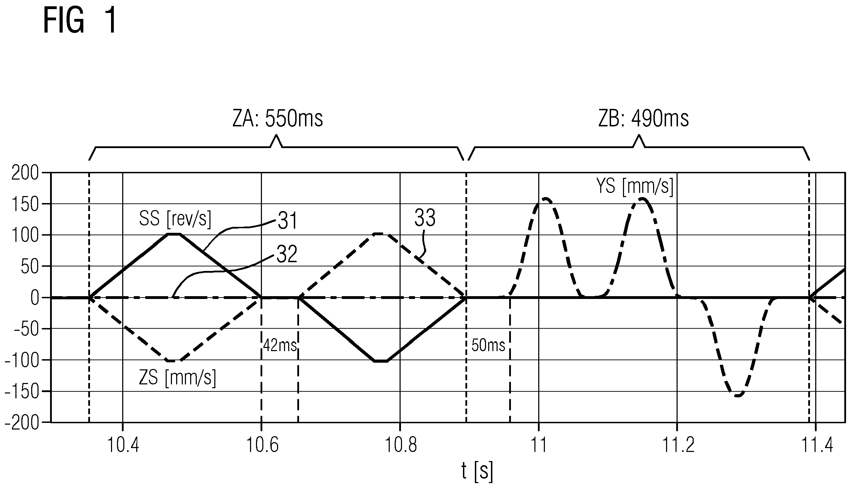

FIG 1 zeigt einen typischen Geschwindeschneidzyklus durch eine Werkzeugmaschine.

Es erfolgt in der Figur zunächst ein Tapping ZA mit einer Zeitdauer von 550 ms und dann eine Fahrt zum nächsten Bohrloch in ZB, Zeitdauer 490 ms. Die Zeit t ist in der Figur in Sekunden s angegeben. ZB ist in dieser Figur von Bewegung und Stoppen geprägt.

Die Figur zeigt den Geschwindigkeitsverlauf einer Maschine bei einer Tapping-Operation. Während des Gewindebohrens interpoliert eine Spindel mit der Z-Achse. Nach dem Gewindebohren / Tapping steht die Spindel, und die Y- und Z-Achse bewegen sich zum nächsten Loch. Dann geht die Tapping-Operation wieder von vorne los.

Die Spindel beschleunigt beim Tapping auf beispielsweise 100 Umdrehungen pro Sekunde (oder auch: revolutions per second; rev/s), also 6000 Umdrehungen pro Minute (siehe hierzu die Spindelgeschwindigkeit SS und den Verlauf der Kurve 31), bremst ab, dreht um, beschleunigt in die andere Richtung, bremst ab und steht. Eine kurze Pause, beispielsweise durch einen Genauhalt bedingt, zwischen der Beschleunigung in eine erste Richtung und der Beschleunigung in eine zweite Richtung sind möglich, hier beispielhaft: 42 ms.

Um diese Tapping-Operation schnell hinzubekommen, wird bei maximaler Beschleunigung die Spindel mit einem Strom beaufschlagt, für den die Spindel auf Dauer nicht ausgelegt ist. Nach dem Tapping erfolgt eine Pause, dann erfolgt wieder eine Beschleunigung.

Thermisch ist das sehr belastend. Dauert ein derartiger Zyklus länger an, z.B. 1 min, dann wird die Spindel zu warm. Die Werkzeugmaschine arbeitet, mitunter z. B. mehrere Minuten, nicht weiter wegen Übertemperatur der Spindel. Alternativ oder zusätzlich kann eine Reduktion der Beschleunigung der Spindel erforderlich sein.

Die Figur zeigt ferner eine Kurve 32, die die Geschwindigkeit YS in Y-Achsenrichtung in mm/s darstellt, sowie eine Kurve 33, die die Geschwindigkeit ZS in Z-Achsenrichtung in mm/s darstellt.

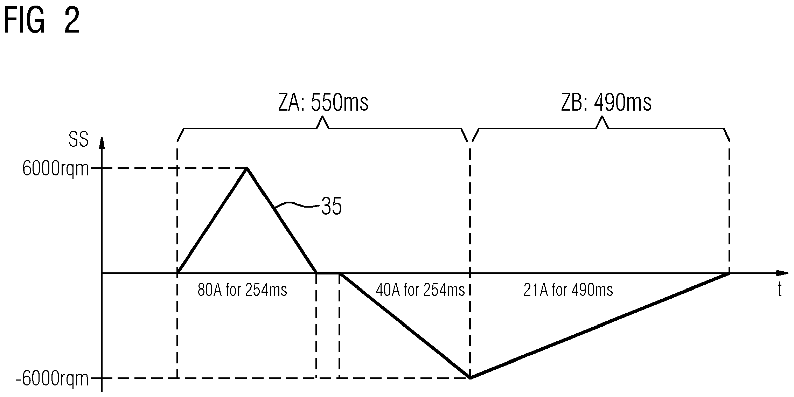

FIG 2 zeigt einen verbesserten Geschwindeschneidzyklus.

Die Figur zeigt schematisch den Drehzahlverlauf der Spindel in Form einer Kurve 35. Die Spindelgeschwindigkeit SS ist in der Figur höchstens 6000 rpm (revolutions per minute) bzw. - 6000 rpm in der anderen Rotationsrichtung.

Auch Stromwerte sind in Ampère A angegeben, welche der Spindel bei konstanter Beschleunigung zugeführt werden.

Anders als in FIG 1 hat die Spindel nach dem Tapping eine Drehzahl von -6000 rpm und zum Abbremsen wird die Zeit genutzt, die die Spindel benötigt, um zum nächsten Bohrloch zu gelangen. Während der 490 ms in ZB kann die Spindel sich erholen.

Der Effektivstrom über den Zyklus verringert sich dadurch bereits auf ca. 46 A (von vorher ca. 56 A), was einer Einsparung von ca. 18% entspricht. Mit dem Verhältnis der Quadrate der Effektivströme verringert sich die thermische Last (hier um ca. 32%).

Tappingvorgänge, bei welchen vor und nach dem Gewindeschneiden die Spindel steht, sind hinsichtlich der thermischen Belastung problematisch.

Wenn das Abbremsen der Spindel beim Rausfahren aus dem geschnittenen Gewinde vermieden wird, wie in FIG 2 dargestellt, sinkt die thermische Belastung.

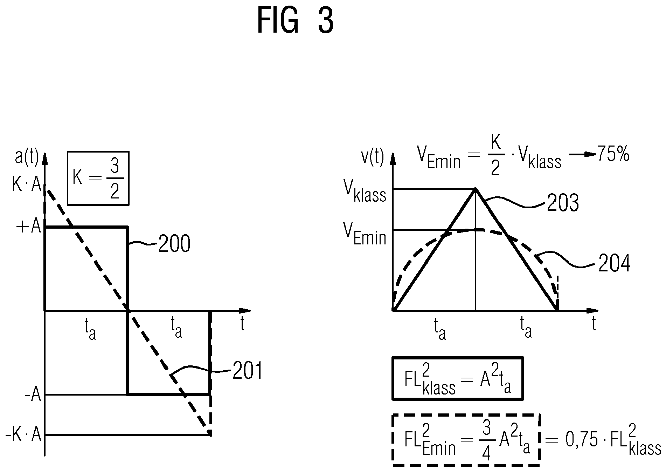

FIG 3 zeigt eine weitere Möglichkeit zur Reduzierung der thermischen Belastung.

Mathematische Zusammenhänge sind in FIG 3 dargestellt.

FIG 3 zeigt einen Faktor K=3/2 sowie eine Beschleunigung in positiver Richtung +A und eine Beschleunigung in negativer Richtung -A.

Eine weitere drastische Reduktion der thermischen Belastung lässt sich mit verlustminimalen Beschleunigungsprofilen erreichen. Die Beschleunigung ist dann nicht konstant, sondern sie sinkt phasenweise linear über der Zeit auf Null ab.

Ein geeignetes Profil ist in FIG 3 gezeigt. Hier wird die Anfangsbeschleunigung ca. 50% größer als die konventionelle (konstante) Beschleunigung gewählt. Damit wird sichergestellt, dass der zurückzulegende Weg in derselben Zeit der gleiche ist. Die thermische Belastung reduziert sich dadurch um ca. 25%.

Für eine verlustminimale Positionierung ist ein geeigneter Beschleunigungsverlauf a(t) sowie das daraus resultierende Geschwindigkeitsprofil v(t) dargestellt.

Ein klassisches Profil der Beschleunigung ist mit 200 gekennzeichnet, ein energieaufwandminimierendes Profil oder auch verlustminimales Profil ist mit 201 dargestellt.

Das Integral unter den Geschwindigkeitskurven 203 und 204 ist wenigstens im Wesentlichen gleich, vorzugsweise exakt, d.h. die Achse legt den geforderten Weg in derselben Zeit zurück. Die Fläche unter dem Quadrat der Beschleunigung reduziert sich aber um ca. 25%. Die Stromwärmeverluste sind wenigstens im Wesentlichen proportional zu i² (insbesondere wenn nur die ohmschen Verluste betrachtet, also Wirbelstromverluste vernachlässigt werden, und auch vernachlässigt wird, dass der Widerstand temperaturabhängig ist).

Es treten ca. 25% weniger thermische Verluste auf. Die bei der Kurve 203 maximale Geschwindigkeit Vₖₗₐₛₛ ist größer als die maximale Geschwindigkeit V_{Emin} bei Kurve 204.

Anhand der Formeln in FIG 3 ist ebenso der Zusammenhang der klassischen thermischen Belastung FLₖₗₐₛₛ und der verlustminimalen thermischen Belastung FL_{Emin} gezeigt.

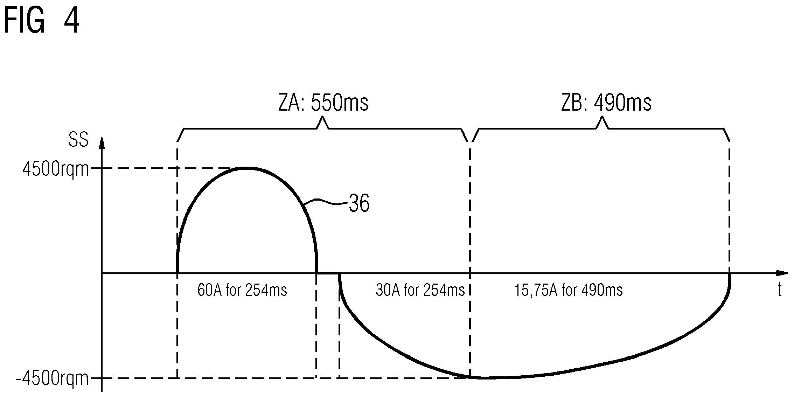

Angewandt auf das obige Tapping-Beispiel in FIG 2 ergibt sich das in FIG 4 gezeigte Profil.

FIG 4 zeigt die Anwendung der verlustminimalen Positionierung auf den Tappingvorgang aus FIG 2. Eine Kurve 36 rotiert in der Figur maximal mit 4500 rpm bzw. -4500 rpm.

Der Effektivstrom sinkt auf ca. 37,2 A ab.

Steht weniger Maximalstrom zur Verfügung, wird vorteilhaft der maximale Beschleunigungswert entsprechend angepasst. Der Faktor 1,5 ist bevorzugt anzuwenden für das verlustminimale Profil (damit Dreiecksprofil), womit eine Einsparung von ca. 25% erreicht wird. Dieser Faktor kann also zwischen 1,0 (konventionelles Profil) und 1,5 (energieminimal bzw. energieaufwandminimierend oder auch verlustminimal) gewählt werden.

Wenn die maximale Beschleunigung beim verlustminimalen Bewegen nur um 3% höher als der Basiswert liegt, sinken die Verluste bereits um knapp 15%. Eine 7,5% höhere Beschleunigung erlaubt bereits eine Verlustreduktion um knapp 20%.

Vorteilhaft ist es, wenn das Werkzeug anhand eines verlustminimalen Bewegungsprofils betrieben wird.

Wie in der Figur gezeigt, ist das Bewegungsprofil vorzugsweise wenigstens teilweise parabelförmig.

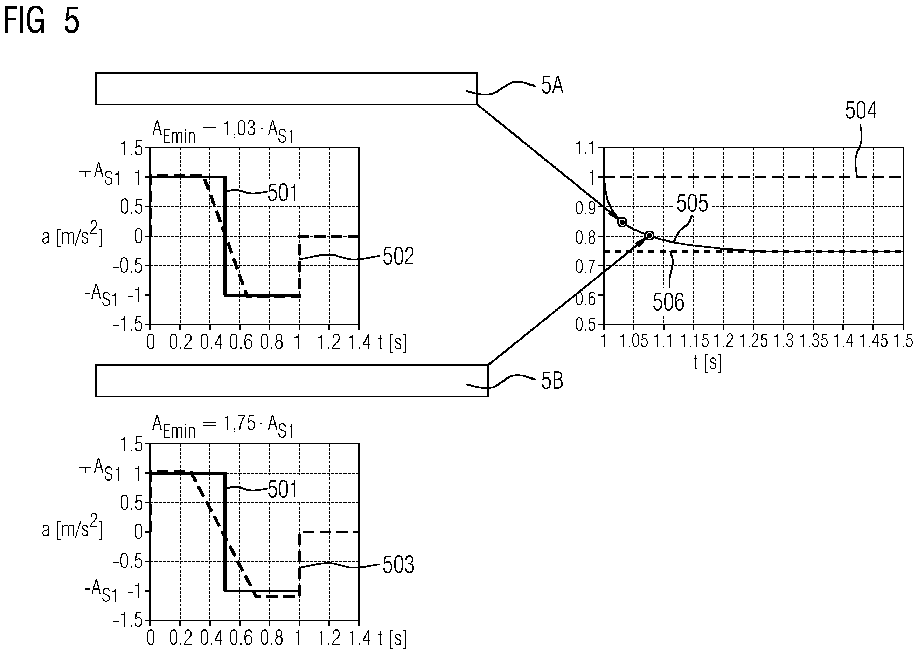

FIG 5 zeigt ein Potential zur Energieeinsparung, wobei ein konventionelles Rechteckprofil 504, ein Dreieckprofil 506 mit ca. 25% Energieeinsparung und die erwähnten 3%mehr Beschleunigung a (siehe Punkt 5A) und 7,5% mehr Beschleunigung a (siehe Punkt 5B) auf der Kurve 505 verglichen werden.

Ferner zeigt die Figur ein konventionelles Profil 501 sowie ein energieminimales Profil 502 (ca. 3% mehr Beschleunigung) und ein energieminimales Profil 503 (7,5% mehr Beschleunigung) .

Das Verfahren ist vorteilhaft auf jeden Wert der konventionellen Beschleunigung skalierbar.

Verlustminimale Profile können auch ebenso unter Einhaltung der Ruckbegrenzung bestimmt werden.

Prinzipiell lässt sich die Zeit vor dem Tapping-Prozess auch für einen sanften Spindel-Hochlauf nutzen. Die Vorgehensweise ist ähnlich zum Runterfahren bzw. Abbremsen der Spindel am Ende des Prozesses, wie bereits erläutert wurde.

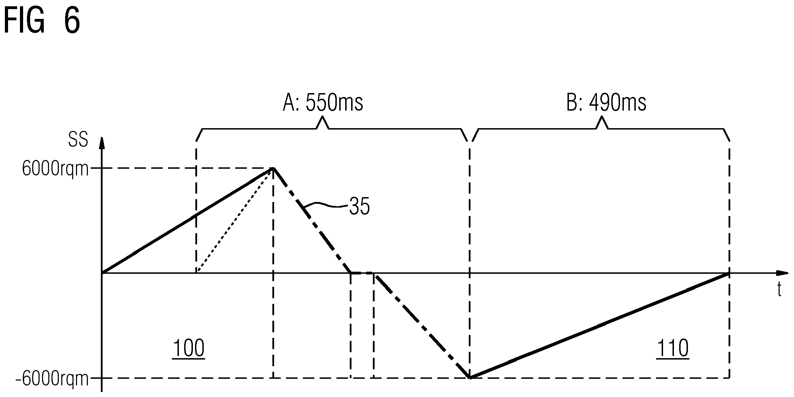

Die Möglichkeit zur Energieeinsparung ist auch hierbei gegeben und vorzugsweise abhängig von der zur Verfügung stehenden Zeit. Zur Veranschaulichung ist der Drehzahlverlauf für das klassische Profil für diesen Vorgang in FIG 6 dargestellt.

Die Kurve 37 veranschaulicht ein Hochlaufen 100 und ein Runterlaufen 110 der Spindel.

Vorteilhaft ist, wie in FIG 6 gezeigt, auch ein Verfahren zur Steuerung einer Rotationsbewegung eines Werkzeugs anhand eines Teileprogramms bei einer Werkzeugmaschine, wobei in dem Teileprogramm eine vom Werkzeug durchzuführende Vorschubbewegung und eine Verfahrbewegung vorgegeben ist, wobei das Werkzeug während der Vorschubbewegung und/oder Verfahrbewegung beschleunigt wird.

Die Beschleunigung findet wenigstens teilweise vorzugsweise auf einer Fahrt zur Bearbeitungsstelle statt.

So kann spindelschonend eine Rotation erreicht werden.

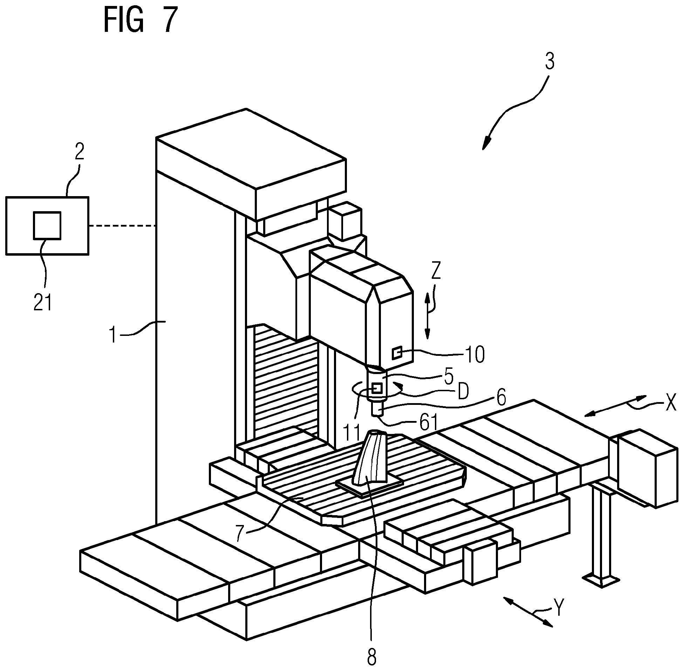

FIG 7 zeigt eine Werkzeug- und/oder Produktionsmaschine 1 und eine Steuerung 2.

Sie bilden ein System 3.

Die Werkzeug- und/oder Produktionsmaschine 1 umfasst in der Figur eine Spindel 5, an welcher ein Werkzeug 6 (insbesondere zum Gewindeschneiden geeignet) befestigt ist. Die Maschine 1 ist zur Durchführung des Verfahrens geeF10ignet.

Eine Spindelrotation (und somit eine Rotation des Werkzeugs) ist in der Figur mit D gekennzeichnet.

Eine Werkzeugspitze bzw. ein Eingriffspunkt des Werkzeugs 6 wird vorteilhaft über einen Tool Center Point 61 (kurz: TCP) beschrieben. Der Tool Center Point 61 befindet sich in der Figur an einer Werkzeugspitze.

Auf einem Arbeitstisch 7 befindet sich in der Figur ein Werkstück 8. Das Werkzeug 6 dient vorteilhaft einer Bearbeitung des Werkstücks 8.

Die Figur zeigt ein optionales Mittel zur Erfassung eines Lageistwerts 10 des TCP 61, beispielsweise in Form eines Drehgebers oder Linearmaßstabs. Die Anordnung des Mittels zur Erfassung des Lageistwerts 10 ist in dieser Figur rein exemplarisch gezeigt.

Eine Istgeschwindigkeit und/oder eine Istbeschleunigung des TCP 61 wird in der Figur optional durch einen Sensor 11 erfasst. Der Sensor 11 ist in der Figur am bzw. nahe am Tool Center Point 61 angeordnet. Auch in der Nähe des Mittels zur Erfassung 10 kann der Sensor 11 angeordnet sein. Der Sensor 11 kann auch an oder nahe an dem Werkstück 8, welches durch die Werkzeug- und/oder Produktionsmaschine 1 bearbeitet wird, angeordnet sein.

Die Steuerung 2, insbesondere als numerische Steuerung ausgebildet, weist in der Figur ein Computerprogrammprodukt 21 auf. Das Computerprogrammprodukt 21 umfasst Befehle, die bei der Ausführung des Programms durch die Steuerung 2 die Steuerung 2 veranlassen, das beschriebene Verfahren auszuführen. Das Computerprogrammprodukt 21 ist hierzu vorteilhaft in der Steuerung hinterlegt.

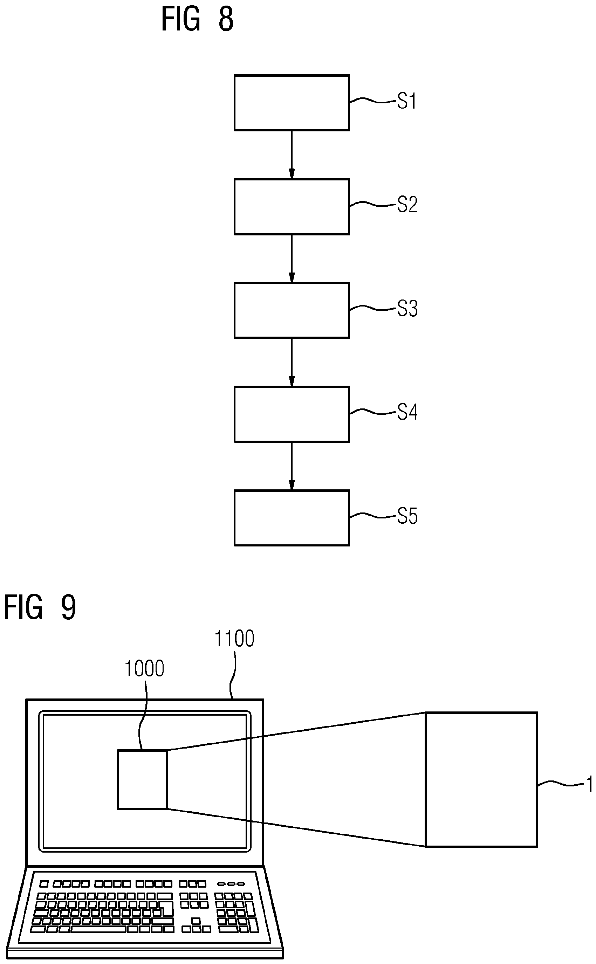

FIG 8 zeigt ein Verfahren.

In einem Verfahrensschritt S1 wird eine vom Werkzeug durchzuführende Rückzugsbewegung und eine Verfahrbewegung vorgegeben.

Vorzugsweise wird ebenso eine Solldrehzahl des Werkzeugs vorgegeben.

In einem Verfahrensschritt S2 wird das Werkzeug in einer ersten Rotationsrichtung beschleunigt.

In einem Verfahrensschritt S3 wird das in der ersten Rotationsrichtung rotierende Werkzeug abgebremst. Die Rotationsbewegung des Werkzeugs wird während der Rückzugsbewegung und/oder Verfahrbewegung abgebremst.

In einem Verfahrensschritt S4 wird das Werkzeug in eine zweite Rotationsrichtung beschleunigt.

In einem Verfahrensschritt S5 wird das in der zweiten Rotationsrichtung rotierende Werkzeug abgebremst. Die Rotationsbewegung des Werkzeugs wird während der Rückzugsbewegung und/oder Verfahrbewegung abgebremst.

Eine Zeitdauer des Abbremsens des in der zweiten Rotationsrichtung rotierenden Werkzeugs ist größer ist als eine Zeitdauer des Abbremsens des in der ersten Rotationsrichtung rotierenden Werkzeugs.

Vorteilhaft ist zudem ein Simulationsprogrammprodukt 1000, siehe FIG 9, ausgebildet als digitaler Zwilling der Werkzeug- und/oder Produktionsmaschine 1, umfassend Befehle, die bei der Ausführung des Programms durch einen Computer 1100 oder eine Simulationseinheit diese veranlassen, das Verfahren abzubilden.

Auf diese Weise kann das Tapping simuliert werden und ggf. eine thermische Belastung abgeschätzt werden.

Das Verfahren kann so gut digital abgebildet werden.

Das Simulationsprogrammprodukt kann extern auf einem separaten Computer oder auch auf der Steuereinheit 2 ausgeführt werden.

## Patentansprüche

1. Verfahren zur Steuerung einer Rotationsbewegung (D) eines Werkzeugs (6) anhand eines Teileprogramms bei einer Werkzeug- und/oder Produktionsmaschine (1), wobei in dem Teileprogramm eine vom Werkzeug (6) durchzuführende Rückzugsbewegung und eine Verfahrbewegung vorgegeben ist, wobei die Rotationsbewegung (D) des Werkzeugs (6) während der Rückzugsbewegung und/oder Verfahrbewegung abgebremst wird.

2. Verfahren nach Anspruch 1, wobei, wenn das Werkzeug (6) nur während der Rückzugsbewegung abgebremst wird, das Werkzeug (6) derart abgebremst wird, dass die Rotationsbewegung bei einer definierten Rückzugsebene gleich null ist.

3. Verfahren nach Anspruch 2, wobei die definierte Rückzugsebene zwischen 5 mm und 15 mm, insbesondere zwischen 8 mm und 12 mm, liegt.

4. Verfahren nach einem der vorhergehenden Ansprüche, wobei, wenn das Werkzeug (6) während der Verfahrbewegung abgebremst wird, das Werkzeug (6) derart abgebremst wird, dass die Rotationsbewegung bei einem Ende der Verfahrbewegung gleich null ist.

5. Verfahren nach einem der vorhergehenden Ansprüche, wobei die Rotationsbewegung (D) des Werkzeugs (6) während der Rückzugsbewegung und wenigstens teilweise während der Verfahrbewegung abgebremst wird.

6. Verfahren nach einem der vorhergehenden Ansprüche, wobei das Werkzeug (6) in einer ersten Rotationsrichtung beschleunigt wird, wobei das in der ersten Rotationsrichtung rotierende Werkzeug (6) abgebremst wird, wobei das Werkzeug (6) in eine zweite Rotationsrichtung beschleunigt wird, wobei das in der zweiten Rotationsrichtung rotierende Werkzeug (6) abgebremst wird, wobei eine Zeitdauer des Abbremsens des in der zweiten Rotationsrichtung rotierenden Werkzeugs größer ist als eine Zeitdauer des Abbremsens des in der ersten Rotationsrichtung rotierenden Werkzeugs.

7. Verfahren nach Anspruch 5, wobei anhand der im Teileprogramm vorgegebenen Verfahrbewegung des Werkzeugs (6) die benötigte Zeitdauer zur Durchführung der vorgegebenen Verfahrbewegung ermittelt wird, wobei anhand der Zeitdauer eine benötigte Kraftanstrengung zum Abbremsen ermittelt wird.

8. Verfahren nach einem der vorhergehenden Ansprüche, wobei die Spindel in der Zeitdauer abgebremst wird, in welcher die Spindel zu einer nächsten Bearbeitungsstelle verfahren wird.

9. Verfahren nach einem der vorhergehenden Ansprüche, wobei eine Solldrehzahl vorgegeben wird.

10. Verfahren nach einem der vorhergehenden Ansprüche, wobei das Werkzeug (6) anhand eines verlustminimalen Bewegungsprofils betrieben wird.

11. Verfahren nach Anspruch 10, derart, dass das Bewegungsprofil wenigstens teilweise parabelförmig ist.

12. Verfahren nach einem der vorhergehenden Ansprüche, wobei in dem Teileprogramm eine vom Werkzeug (6) durchzuführende Vorschubbewegung und eine weitere Verfahrbewegung vorgegeben ist, wobei das Werkzeug (6) während der Vorschubbewegung und/oder der weiteren Verfahrbewegung beschleunigt wird.

13. Steuereinrichtung zur Durchführung des Verfahrens nach einem der Ansprüche 1 bis 12.

14. Werkzeug- und/oder Produktionsmaschine (1), aufweisend eine Steuereinrichtung nach Anspruch 13.

15. Computerprogrammprodukt (21), umfassend Befehle, die bei der Ausführung des Programms durch eine Steuereinrichtung (2) diese veranlassen, das Verfahren nach einem der Ansprüche 1 bis 12 auszuführen.

16. Simulationsprogrammprodukt (1000), ausgebildet als digitaler Zwilling der Werkzeug- und/oder Produktionsmaschine (1) nach Anspruch 14, umfassend Befehle, die bei der Ausführung des Programms durch einen Computer (1100) oder eine Simulationseinheit diesen oder diese veranlassen, das Verfahren nach einem der Ansprüche 1 bis 12 abzubilden.
